# EUROPÄISCHE PATENTSCHRIFT

(11) **EP 3 389 967 B1**
(45) Veröffentlichungstag und Bekanntmachung des Hinweises auf die Patenterteilung: **23.09.2020**
(21) Anmeldenummer: 16809417.5
(22) Anmeldetag: 14.12.2016
(51) Int. Cl.: B29B 7/40, B29B 7/42, B29B 7/48, B29B 7/88, B29C 48/385, B29C 48/41, B29C 48/565, B29C 48/575, B29C 48/685, B29C 48/42, B29C 48/43, B29B 7/74

(54) **VORRICHTUNG UND VERFAHREN ZUR DISPERGIERUNG VON FESTSTOFFEN, FLÜSSIGKEITEN UND GASEN IN EINEM EXTRUDER**
DEVICE AND METHOD FOR THE DISPERSION OF SOLIDS, LIQUIDS AND GASES IN AN EXTRUDER
DISPOSITIF ET PROCEDE DE DISPERSION DE MATIERES SOLIDES, DE LIQUIDES ET DE GAZ DANS UNE EXTRUDEUSE

(30) Priorität: 16.12.2015 EP 15200372
(43) Veröffentlichungstag der Anmeldung: 24.10.2018
(73) Patentinhaber: Covestro Intellectual Property GmbH & Co. KG, 51373 Leverkusen (DE)
(72) Erfinder: KÖNIG, Thomas, 51375 Leverkusen (DE); BIERDEL, Michael, 51373 Leverkusen (DE)
(74) Vertreter: Levpat
(86) Internationale Anmeldenummer: PCT/EP2016/080926
(87) Internationale Veröffentlichungsnummer: WO 2017/102808

(56) Entgegenhaltungen:
- EP-A2- 0 902 057
- DE-C2- 3 216 939
- DE-T2- 69 203 055
- DE-T2- 69 205 105
- DE-T2- 69 313 513
- DE-T2- 69 810 869
- JP-A- 2006 321 821

## Beschreibung

Die Erfindung betrifft eine Vorrichtung enthaltend einen Extruder, auf dessen Welle(n) mindestens eine mitrotierende Scheibe mit Unterbrechungen angebracht ist, und wobei unmittelbar an die mitrotierende Scheibe anschließend eine nicht mitrotierende Scheibe angeordnet ist, die ebenfalls Unterbrechungen aufweist. Die Vorrichtung eignet sich zum Dispergieren von Feststoffen, Flüssigkeiten und Gasen und weist eine verbesserte Dispergierwirkung auf. Die Erfindung betrifft ferner ein Verfahren zur Dispergierung von Feststoffen, Flüssigkeiten und/oder Gasen in plastischen Massen unter Verwendung dieser Vorrichtung.

Bekanntlich gibt es verschiedene Arten von Extrudern. Am häufigsten eingesetzt werden aufgrund ihrer einfachen Bauart Einschneckenextruder (synonym auch als Einwellenextruder), bei denen sich eine einzige Welle in einem Gehäuse dreht. Eine weitere Art sind Mehrschneckenextruder (synonym auch Mehrwellenextruder), bei denen mehrere Wellen drehen. Hierbei sind gleich- und gegenläufige Extruderwellen möglich, oder auch Kombinationen davon. Einwellenextruder sind dem Fachmann beispielsweise aus "Der Einschneckenextruder - Grundlagen und Systemoptimierung - Verein Deutscher Ingenieure, VDI-Gesellschaft Kunststofftechnik, 2. Aufl. - Düsseldorf VDI-Verlag (2001)" bekannt. Mehrwellenextruder sind dem Fachmann beispielsweise aus "Klemens Kohlgrüber: Der gleichläufige Doppelschneckenextruder, Hanser Verlag München 2007, bekannt.

Die Dispergierung von Feststoffen, Flüssigkeiten oder Gasen in einer plastischen Masse mit Hilfe eines Extruders ist eine Aufgabenstellung, die in der Aufbereitung von Polymeren häufig vorkommt.

Wie dem Fachmann bekannt ist, hat eine ungenügende Dispergierung Nachteile. Werden Feststoffe nicht gut dispergiert, so kann das zu erhöhten Kosten durch Mehrverbrauch an Material und Minderung der mechanischen Eigenschaften führen, indem sich beispielsweise Stippen bilden. Schlecht dispergierte Flüssigkeiten werden beispielsweise nur ungenügend verteilt oder liegen bei löslichen Flüssigkeiten nach der Dispergierung noch frei vor. Ungenügend verteilte Flüssigkeiten führen zu einer ungleichmäßigen Verteilung von Produkteigenschaften und können so Gebrauchseigenschaften verschlechtern, wenn z.B. ein Teil ein Polymers eine hohe Additivkonzentration hat und ein anderer Teil eine niedrige Konzentration. Liegt ein Teil einer Flüssigkeit am Kopf eines Extruders noch frei vor, so kann z.B. eine organische Flüssigkeit z.B. aus den Lagern einer Zahnradpumpe austreten oder an der Düse bei hohen Temperaturen herausspritzen. Dies kann zu Verschmutzungsproblemen, Verletzungen durch die heiße Flüssigkeit, Umweltproblemen durch Verdampfen der Flüssigkeit oder sogar zu Bränden führen, wenn sich eine fein verteilte organische Flüssigkeit an der Luft entzündet.

Eine schlechte Gasdispergierung kann, abhängig vom Ziel des Prozesses, beispielsweise zu ungleichmäßigem Schaum bei der Herstellung von Isoliermaterialien führen oder zu ungenügender Entgasung.

Jeder Dispergierprozess in einem Extruder ist gleichzeitig mit einem Energieeintrag verbunden. Im Allgemeinen führt ein erhöhter Energieeintrag zu thermischer oder anderer Produktschädigung, die unerwünscht ist. Eine Verbesserung der Dispergierwirkung bei gleichem Energieeintrag oder, umgekehrt, eine Verringerung des Energieeintrags bei gleicher Dispergierwirkung ist daher eine wichtige technische Aufgabe.

Zur Lösung dieser Aufgabe offenbart DE69810869T2 einen Extruder mit einer auf einer Welle mitrotierbaren Scheibe, die Nuten aufweist, und an diese Scheibe anschließend eine nicht mitrotierbare Scheibe angeordnet ist, die ebenfalls Nuten besitzt. Dabei weist die mitrotierbare Scheibe einen Spalt zum Gehäuse auf und die nicht mitrotierbare Scheibe einen Spalt zur Kernwelle.

Eine der Vorrichtung aus DE69810869T2 im Wesentlichen entsprechende Vorrichtung ist auch in der EP0902057A2 offenbart.

Jedoch bieten die in dem vorgenannten Dokumenten offenbarten Vorrichtungen noch keine befriedigende Lösung der Aufgabe.

Es stellt sich daher ausgehend vom Stand der Technik die Aufgabe, eine Vorrichtung enthaltend einen Extruder mit einer verbesserten Dispergierwirkung und/oder einem verringertem Energieeintrag bereitzustellen.

Diese Aufgabe wird durch die Bereitstellung der erfindungsgemäßen Vorrichtung gemäß dem Anspruch 1 gelöst, enthaltend einen Extruder mit mindestens einer Welle und einem Gehäuse, wobei auf der Welle mindestens eine Scheibe mit Nuten angebracht ist, die mit der Welle mitrotierbar ist, und an die Scheibe unmittelbar anschließend entweder in Produktfließrichtung oder entgegen der Produktfließrichtung eine nicht mitrotierbare Scheibe angeordnet ist, die ebenfalls Nuten besitzt, wobei die mitrotierbare Scheibe mit der Welle verbunden ist und einen Spalt zum Gehäuse hin aufweist und die nicht mitrotierbare Scheibe mit dem Gehäuse verbunden ist und einen Spalt zur rotierbaren Welle hin aufweist, dadurch gekennzeichnet, dass das Spiel s zwischen dem Rand der mitrotierbaren Scheibe und dem Gehäuse kleiner ist als die Gangtiefe g dividiert durch 4, wobei g der Abstand zwischen dem Kerndurchmesser der Welle und dem Gehäuse ist.

Überraschend wurde gefunden, dass die erfindungsgemäße Vorrichtung eine verbesserte Dispergierung bei gleichbleibenden Energieeintrag bewirkt. Soweit eine verbesserte Dispergierung nicht oder nicht in dem Maße benötigt wird, kann der Energieeintrag gesenkt werden.

Die Verwendung der erfindungsgemäßen Vorrichtung in einem Verfahren gemäß Anspruch 10 ermöglicht es somit, die Produktqualität der plastischen Masse durch eine verbesserte Homogenisierung und/oder eine reduzierten Energieeintrag zu verbessern.

Erfindungsgemäß ist dabei - wie bereits oben beschrieben - auf der/den Wellen(n) des Extruder mindestens eine Scheibe mit Unterbrechungen angebracht ist, die mit der Welle mitrotiert, und an die unmittelbar anschließend entweder in Produktfließrichtung oder entgegen der Produktfließrichtung eine nicht mitrotierende Scheibe angeordnet ist, die ebenfalls Unterbrechungen besitzt. Dabei ist die mitrotierende Scheibe mit der drehenden Welle verbunden und besitzt einen Spalt zum Gehäuse hin, und die nicht mitrotierende Scheibe ist mit dem Gehäuse verbunden und besitzt einen Spalt zur rotierenden Kernwelle hin.

Bevorzugt erfolgt eine Anordnung von mehreren Kombinationen derartiger Scheiben hintereinander, um die Dispergierwirkung zu erhöhen; d.h. der Extruder weist eine alternierende Abfolge aus rotierenden Scheiben und nicht-rotierenden Scheiben auf.

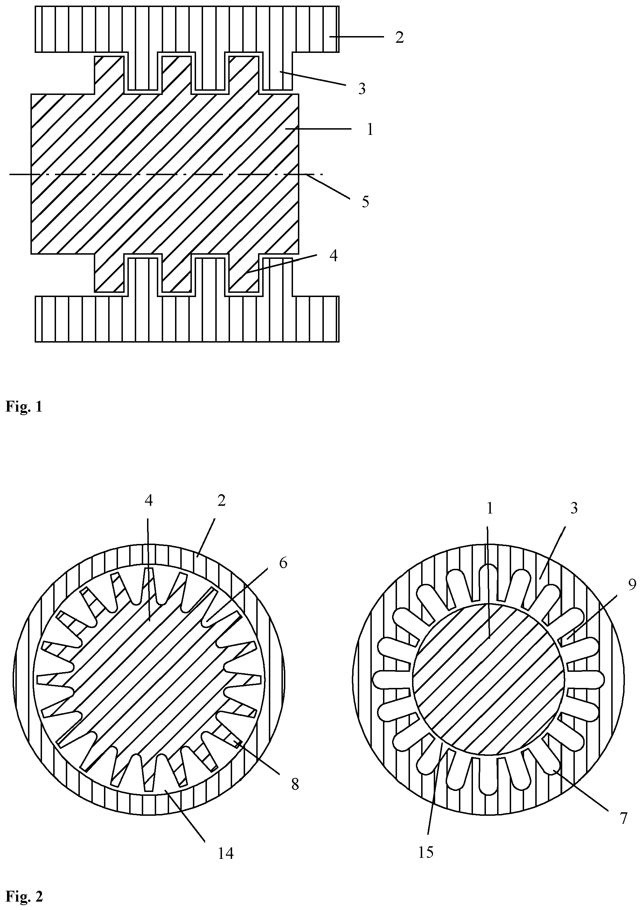

Figur 1 zeigt beispielhaft einen Schnitt durch eine Extruderwelle (1) mit dem Gehäuse (2) und den damit verbundenen Scheiben (3) und der Welle (1) und den damit verbundenen Scheiben (4) sowie der Drehachse (5).

In einer bevorzugten Ausführung setzten sich die Unterbrechungen der mitrotierenden Scheibe bis zum Rand der Scheibe fort, d.h. der Rand der mitrotierenden Scheibe ist unterbrochen. Erfindungsgemäß sind die Unterbrechungen als Nuten ausgeführt, die bis zum Kerndurchmesser reichen können, es aber nicht müssen. Figur 2 zeigt beispielhaft derartige Nuten (6) in einer Scheibe (4), die mit der Welle (1) verbunden ist (links) und sich mit dreht und Nuten (7) in einer Scheibe (3), die mit dem Gehäuse (2) verbunden ist und sich nicht mit dreht. Die drehenden Teile mit der Welle sind jeweils diagonal schraffiert, die stehenden Teile mit Gehäuse (2) senkrecht. Die Nuten (6,7) können U-förmig oder V-förmig sein.

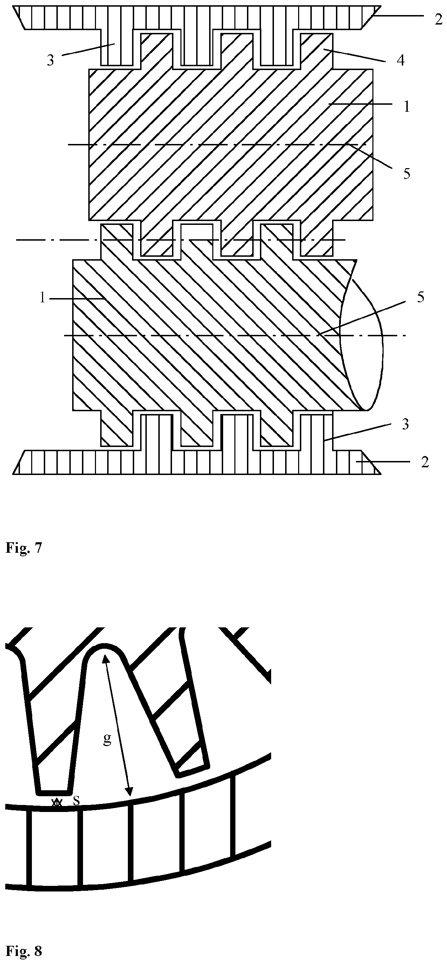

Die Nuten (6,7) sind durch Stege (8,9) voneinander getrennt. Erfindungsgemäß ist die Gangtiefe g definiert als der Abstand zwischen Kerndurchmesser der Welle und Gehäuse (siehe Figur 8, welche einen Ausschnitt aus Figur 2 zeigt).

Das Spiel s zwischen dem Rand der mitrotierenden Scheibe und dem Gehäuse muss erfindungsgemäß dabei - wie bereits oben beschrieben - kleiner als g/4 sein. Erfindungsgemäß bevorzugt muss das Spiel s zwischen dem Rand der mitrotierenden Scheibe und dem Gehäuse kleiner als g/8 sein. Weiter erfindungsgemäß bevorzugt ist das Spiel s größer als g/256, besonders bevorzugt größer als g/128 und ganz besonders bevorzugt größer als g/64.

Das Verhältnis zwischen der Dicke der rotierenden Scheibe(n) und dem Gehäusedurchmesser ist bevorzugt zwischen 0,2 und 0,02, besonders bevorzugt zwischen 0,15 und 0,03 und ganz besonders bevorzugt zwischen 0,1 und 0,04.

Das Verhältnis zwischen der Dicke der nicht rotierenden Scheibe(n) und dem Gehäusedurchmesser ist bevorzugt zwischen 0,2 und 0,02, besonders bevorzugt zwischen 0,15 und 0,03 und ganz besonders bevorzugt zwischen 0,1 und 0,04.

Das Verhältnis zwischen dem axialen Spalt zwischen zwei Scheiben und dem Gehäusedurchmesser ist bevorzugt zwischen 0.01 und 0.15, besonders bevorzugt zwischen 0.02 und 0.1 und ganz besonders bevorzugt zwischen 0.03 und 0.08.

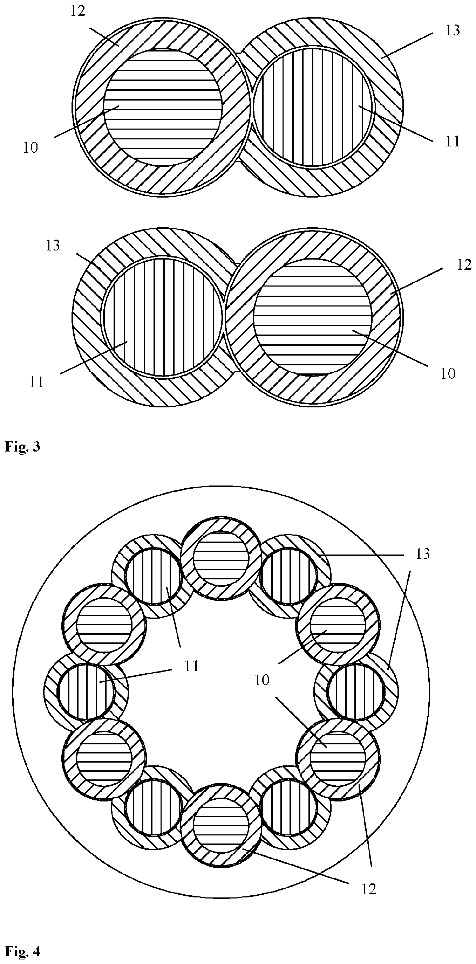

Eine bevorzugte Variante bei ineinander greifenden Mehrwellenextrudern ist, dass dort, wo die Schneckenwellen ineinandergreifen, auf einer Welle mitrotierend eine Scheibe mit Unterbrechungen angebracht ist, und dass sowohl die Scheibe , die nicht mitrotiert, als auch die Scheibe, die mitrotiert, jeweils ohne die Lücken zu betrachten, mindestens 70% des freien Querschnitts zwischen Kerndurchmesser und Außenwand abdecken, bevorzugt mindestens 80% und bevorzugt mindestens 90%. Dies ist beispielhaft für einen Zweiwellenextruder in Figur 3 und für einen Zwölfwellenextrder in Figur 4 gezeigt. In diesen Zeichnungen ist:
- die Kernwellen (10), die eine rotierende Scheibe mitnehmen, waagerecht schraffiert
- die Kernwellen (11), die keine rotierende Scheibe mitnehmen, senkrecht schraffiert
- die mitrotierenden Scheiben (12) von links unten nach rechts oben schraffiert
- die nicht mitrotierenden Scheiben (13) von links oben nach rechts unten schraffiert.

Figur 7 zeigt beispielhaft die Anordnung der mitrotierenden Scheiben (4) und nicht mitrotierenden Scheiben (3) in einem Doppelschneckenextruder im Schnitt. Das Gehäuse (2) und die damit verbundenen nicht rotierenden Scheiben (3) sind dabei senkrecht schraffiert, die eine rotierende Schnecke (1) mitsamt den damit verbundenen Scheiben (4) sind jeweils unterschiedlich diagonal schraffiert.

Wenn im Folgenden von "den Nuten" die Rede ist, so sind damit sowohl Nuten (6) auf einer mitrotierenden Scheibe als auch Nuten (7) auf einer feststehenden Scheibe gemeint.

In einer bevorzugten Ausführung sind die Unterbrechungen der rotierenden Scheibe und die Unterbrechungen der nicht rotierenden Scheibe jeweils als Nuten ausgeführt. In einem Schnitt senkrecht zur Drehachse können die Nuten radial oder schräg angeordnet sein. Der Grund der Nuten ist bevorzugt mit Rundungen versehen, um Kerbspannungen und nicht produktgespülte Ecken zu vermeiden.

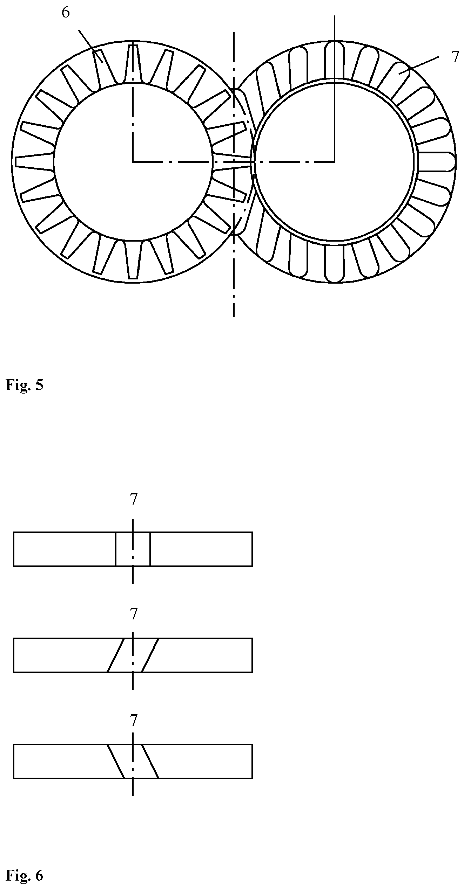

In einer bevorzugten Ausführung für Mehrwellenextruder sind die Nuten (6) an der Scheibe der drehenden Welle radial (senkrecht zur Drehachse) angeordnet und die Nuten (7) an der nicht mitdrehenden Scheibe zum Teil radial und zum Teil schräg relativ zur Drehachse angeordnet, um den Zwickelbereich mit zu überdecken, wie in Figur 5 gezeigt.

Die Kanten der Nuten in Projektion senkrecht zur Drehrichtung sind bevorzugt parallel oder öffnen sich zum Spalt (14), der zwischen drehender Scheibe (4) und Gehäuse (2) bzw. feststehender Scheibe (3) und Kernwelle (1) bleibt. Besonders bevorzugt öffnen sie sich zu dem Spalt hin, wie beispielsweise in Figur 2 gezeigt.

Die Nuten (7) können senkrecht zur Drehachse verlaufen oder in einem Winkel zu ihr, wie beispielhaft an einer Nut in Figur 6 gezeigt wird. Sind die Kanten der Nuten nicht senkrecht zur Drehachse angeordnet, so folgen sie bevorzugt einer Wendel. Über die Steigung der Wendel kann eine bevorzugte Förderrichtung eingestellt werden.

Die Anzahl der Nuten (6,7), verteilt auf den Umfang der rotierenden Scheibe (4) und der nicht-rotierenden Scheibe (3), beträgt bevorzugt jeweils 4 bis 60, besonders bevorzugt jeweils 8 bis 40 und ganz besonders bevorzugt jeweils 12 bis 30.

Die Stege (8,9) können einen rechteckigen Querschnitt haben, oder die Ecken können abgerundet sein, oder sie können einen runden (kreisförmigen, elliptischen o.ä.) Querschnitt haben.

Ein weiterer Gegenstand der vorliegenden Erfindung ist ein Verfahren zur Extrusion plastischer Massen in einer erfindungsgemäßen Vorrichtung.

Unter einer plastischen Masse wird eine verformbare Masse verstanden. Beispiele für plastische Massen sind Polymerschmelzen, vor allem von Thermoplasten und Elastomeren, Mischungen von Polymerschmelzen oder Dispersionen von Polymerschmelzen mit Feststoffen, Flüssigkeiten oder Gasen.

Das erfindungsgemäße Verfahren wird zum Dispergieren von Gasen, Flüssigkeiten oder Feststoffen Additiven in der plastischen Masse eingesetzt.

Eine wichtige Klasse von plastischen Massen sind Polymere.

Polymeren werden durch verschiedenartige Feststoffe unterschiedliche Eigenschaften verliehen. Dies kann beispielsweise mechanische Festigkeit, E-Modul, elektrische Leitfähigkeit, Zähigkeit oder Farbe sein. Mechanische Füllstoffe können auch helfen, bei Polymeren, deren Herstellung aufwändig und/oder energieintensiv ist, das Polymer zum Teil durch weniger aufwändige Feststoffe zu ersetzen.

Die Feststoffe liegen häufig in agglomerierter Form vor und müssen, damit sie ihre Wirkung entfalten können, dispergiert werden.

Feststoffe können in partikulärer Form vorliegen, wie beispielsweise Calciumcarbonat, Talkum oder Ruß. Es kann sich auch um Fasern handeln, wie beispielsweise Bündel von Glasfasern, die voneinander getrennt werden sollen, aus Carbonfasern oder Verstärkungsfasern aus Polymeren wie Kevlar.

Plastische Massen können auch aus Feststoffen und Flüssigkeiten bestehen, wie z.B. Pasten oder Teige. Hierbei dient das Einmischen von Flüssigkeiten oder das Dispergieren von Feststoffen beispielsweise dazu, die Paste herzustellen oder sie in ihrer Zusammensetzung zu modifizieren.

Die Dispergierung von Flüssigkeiten in Polymeren kann ebenfalls zu verschiedenen Zwecken dienen. Die Flüssigkeiten können beispielsweise Additive sein, die dem Polymer bestimmte Eigenschaften verleihen, wie beispielsweise thermische Stabilisatoren, Weichmacher, Extenderöle, UV-Stabilisatoren, Sauerstoff-Fänger, Starter für chemische Reaktionen wie Vernetzung oder Polymerabbau, Katalysatoren, Inhibitoren für Katalysatoren, Vulkanisationsbeschleuniger, Flammschutzmittel, Kompatibilsierer zwischen verschiedenen Polymerphasen oder zwischen Polymer und Feststoff, oder ein Hilfsstoff für einen Prozess sein, wie beispielsweise Wasser für die Polymerentgasung.

Die Dispergierung von Gasen in Polymeren kann ebenfalls verschiedenen Zwecken dienen. Es ist ein wichtiger Schritt in der Herstellung von Polymerschäumen, wie sie z.B. zur Dämmung eingesetzt werden. Weiterhin kann das dispergierte Gas ebenfalls zur Entgasung von Polymeren dienen.

Bei den Polymeren kann es sich um Thermoplaste handeln, wie beispielsweise Polycarbonate, Polyamide, Polyester, insbesondere Polybutylenterephthalat und Polyethylenterephthalat, Polyether, thermoplastische Polyurethane, Polyacetale, Fluorpolymere, insbesondere Polyvinylidenfluorid, Polyethersulfone, Polyolefine, insbesondere Polyethylen und Polypropylen, Polyimide, Polyacrylate, insbesondere Poly(methyl)methacrylate, Polyphenylenoxid, Polyphenylensulfide, Polyetherketone, Polyaryletherketone, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid. Ebenso eingesetzt werden können sogenannte Blends aus den aufgeführten Thermoplasten, worunter der Fachmann eine Kombination aus zwei oder mehreren der Thermoplaste versteht. Besonders bevorzugt wird das erfindungsgemäße Verfahren bei der Herstellung und der Compoundierung von Polycarbonat angewendet.

Weitere bevorzugte Einsatzmaterialien sind Kautschuke. Als Kautschuk wird bevorzugt wenigstens einer aus der Reihe Styrol-Butadien-Kautschuk, Naturkautschuk, Butatiden-Kautschuk, Isopren-Kautschuk, Ethylen-Propylen-Dien-Kautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Thermoplastisches Polyurethan, Guttapercha, Arylatkautschuk, Fluorkautschuk, Siliconkautschuk, Sulfidkautschuk, Chlorsulfonyl-Polyethylen-Kautschuk eingesetzt. Eine Kombination von zwei oder mehreren der aufgeführten Kautschuke, oder eine Kombination aus einem oder mehreren Kautschuk mit einem oder mehreren Kunststoffen ist natürlich auch möglich.

Diese Thermoplaste und Elastomere können in reiner Form oder als Mischungen mit Füll- und Verstärkungsstoffen, wie insbesondere Glasfasern, als Mischungen untereinander oder mit anderen Polymeren oder als Mischungen mit üblichen Polymeradditiven eingesetzt werden

In einer bevorzugten Ausführungsform des erfindungsgemäßen Verfahrens werden den plastischen Massen, insbesondere den Polymerschmelzen und Mischungen von Polymerschmelzen, Additive beigemengt. Diese können als Feststoffe, Flüssigkeiten oder Lösungen gemeinsam mit dem Polymer in den Extruder gegeben werden oder aber es wird wenigstens ein Teil der Additive oder alle Additive dem Extruder über einen Seitenstrom zugeführt.

Additive können einem Polymer vielfältige Eigenschaften verleihen. Dies können beispielsweise Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidatien wirksame Benzofurane und Indolinone, Formtrennmittel, flammhemmende Additive, antistatische Mittel, Färbemittel und Schmelzestabilisatoren. Beispielhaft für diese sind Ruß, Glasfaser, Ton, Glimmer, Graphitfaser, Titandioxid, Kohlenstofffasern, Kohlenstoffnanoröhrchen, ionische Flüssigkeiten und Naturfasern.

In einer weiteren bevorzugten Ausführungsform des erfindungsgemäßen Verfahrens enthalten die dem Extruder zugeführten plastischen Massen Monomere, Oligomere und/oder Lösungsmittel, welche durch das erfindungsgemäße Verfahren zumindest teilweise entfernt werden. In dieser Ausführungsform wird ein gasförmiges Schleppmittel in der plastischen Masse dispergiert. Vorzugsweise wird das Schleppmittel in einem späteren Schritt durch Anlegen von Vakuum wieder entfernt.

## Patentansprüche

1. Vorrichtung enthaltend einen Extruder mit mindestens einer Welle (1) und einem Gehäuse (2), wobei auf der Welle (1) mindestens eine Scheibe (4) mit Nuten angebracht ist, die mit der Welle (1) mitrotierbar ist,
und an die Scheibe (4) unmittelbar anschließend entweder in Produktfließrichtung oder entgegen der Produktfließrichtung eine nicht mitrotierbare Scheibe (3) angeordnet ist, die ebenfalls Nuten besitzt;
wobei die mitrotierbare Scheibe (4) mit der Welle (1) verbunden ist und einen Spalt (14) zum Gehäuse (2) hin aufweist und die nicht mitrotierbare Scheibe (3) mit dem Gehäuse (2) verbunden ist und einen Spalt (15) zur rotierbaren Welle (1) hin aufweist,
**dadurch gekennzeichnet, dass** das Spiel s zwischen dem Rand der mitrotierbaren Scheibe (4) und dem Gehäuse (2) kleiner ist als die Gangtiefe g dividiert durch 4; wobei g der Abstand zwischen dem Kerndurchmesser der Welle (1) und dem Gehäuse (2) ist.

2. Vorrichtung nach Anspruch 1, **dadurch gekennzeichnet, dass** der Extruder eine alternierende Abfolge aus rotierbaren Scheiben (4) und den nicht-rotierbaren Scheiben (3) aufweist.

3. Vorrichtung nach einem der vorhergehenden Ansprüche, **dadurch gekennzeichnet, dass** das Verhältnis zwischen der Dicke der rotierbaren Scheiben (4) und dem Gehäusedurchmesser ein Wert zwischen 0,2 und 0,02 ist, und das Verhältnis zwischen der Dicke der nicht rotierbaren Scheiben (3) und dem Gehäusedurchmesser ein Wert zwischen 0,2 und 0,02 ist.

4. Vorrichtung nach einem der vorhergehenden Ansprüche, **dadurch gekennzeichnet, dass** das Verhältnis zwischen dem axialen Spalt zwischen der rotierbaren Scheibe(n) (4) und der nicht rotierbaren Scheibe(n) (3) und dem Gehäusedurchmesser ein Wert zwischen 0.01 und 0.15 ist.

5. Vorrichtung nach einem der vorhergehenden Ansprüche, **dadurch gekennzeichnet, dass** die Nuten in der rotierbaren Scheibe und der nicht rotierbaren Scheibe senkrecht zur Drehachse oder schräg zur Drehachse angeordnet sein können.

6. Vorrichtung nach Anspruch 5, **dadurch gekennzeichnet, dass** die Nuten (7) in der nicht rotierbaren Scheibe (3) wendelförmig angeordnet sind.

7. Vorrichtung nach Anspruch 5 oder 6, **dadurch gekennzeichnet, dass** die Anzahl der Nuten (6) in der rotierbaren Scheibe (4) und die Anzahl der Nuten (7) in der nicht rotierbaren Scheibe (3) jeweils 4 bis 60 beträgt.

8. Vorrichtung nach einem der vorhergehenden Ansprüche, **dadurch gekennzeichnet, dass** der Extruder ein Mehrwellenextrudern mit ineinander greifenden Schneckenwellen ist.

9. Vorrichtung nach Anspruch 7, **dadurch gekennzeichnet, dass** die Nuten (6) der rotierbaren Scheibe(n) (4) radial angeordnet sind und die Nuten (7) der nicht mitdrehbaren Scheibe (3) zum Teil radial und zum Teil schräg angeordnet sind.

10. Verfahren zur Extrusion von plastischen Massen **dadurch gekennzeichnet, dass** das Verfahren den Schritt der Verwendung der Vorrichtung nach einem der Ansprüche 1 bis 9 aufweist.

11. Verfahren nach Anspruch 10, **dadurch gekennzeichnet, dass** der Extruder zum Dispergieren von gasförmigen, flüssigen oder pulverförmigen Additiven in der plastischen Masse verwendet wird.

12. Verfahren nach Anspruch 11, **dadurch gekennzeichnet, dass** die plastischen Massen Thermoplaste oder Elastomere sind.

13. Verfahren nach Anspruch 12, **dadurch gekennzeichnet, dass** als Thermoplast ein Homo-oder Copolycarbonat oder ein Blend enthaltend wenigstens ein Homo- oder Copolycarbonat eingesetzt wird.

## Claims

1. Device comprising an extruder with at least one shaft (1) and one barrel (2),
where
attached on the shaft (1) there is at least one disc (4) which has grooves and which can rotate concomitantly with the shaft (1),
and arranged immediately following the disc (4) either in product flow direction or counter to product flow direction there is a disc (3) that is not concomitantly rotatable and that likewise has grooves;
where the concomitantly rotatable disc (4) is connected to the shaft (1) and has a gap (14) in the direction of the barrel (2) and the disc (3) that is not concomitantly rotatable is connected to the barrel (2) and has a gap (15) in the direction of the rotatable shaft (1),
**characterized in that** the clearance s between the edge of the concomitantly rotatable disc (4) and the barrel (2) is smaller than the channel depth g divided by 4, where g is the distance between the shaft (1) and the barrel (2).

2. Device according to Claim 1, **characterized in that** the extruder has an alternating succession of rotatable discs (4) and non-rotatable discs (3).

3. Device according to either of the preceding claims, **characterized in that** the ratio between the thickness of the rotatable discs (4) and the barrel diameter is between 0.2 and 0.02, and the ratio between the thickness of the non-rotatable discs (3) and the barrel diameter is between 0.2 and 0.02.

4. Device according to any of the preceding claims, **characterized in that** the ratio between the axial gap between the rotatable disc(s) (4) and the non-rotatable disc(s) (3) and the barrel diameter is between 0.01 and 0.15.

5. Device according to any of the preceding claims, **characterized in that** the grooves in the rotatable disc and the non-rotatable disc can be arranged perpendicularly to the axis of rotation or obliquely to the axis of rotation.

6. Device according to Claim 5, **characterized in that** the grooves (7) in the non-rotatable disc (3) are arranged spirally.

7. Device according to Claim 5 or 6, **characterized in that** the number or grooves (6) in the rotatable disc (4) and the number of grooves (7) in the non-rotatable disc (3) is respectively 4 to 60.

8. Device according to any of the preceding claims, **characterized in that** the extruder is a multiscrew extruder with intermeshing screws.

9. Device according to Claim 7, **characterized in that** the grooves (6) of the rotatable disc(s) (4) are arranged radially and the grooves (7) of the disc (3) that is not concomitantly rotatable are arranged to some extent radially and to some extent obliquely.

10. Process for the extrusion of plastic compositions, **characterized in that** the process comprises the step of use of the device according to any of Claims 1 to 9.

11. Process according to Claim 10, **characterized in that** the extruder is used for the dispersion of gaseous, liquid or pulverulent additives in the plastic composition.

12. Process according to Claim 11, **characterized in that** the plastic compositions are thermoplastics or elastomers.

13. Process according to Claim 12, **characterized in that** the thermoplastic used comprises a homo- or copolycarbonate or a blend comprising at least one homo- or copolycarbonate.

## Revendications

1. Dispositif, comprenant une extrudeuse dotée d'au moins un arbre (1) et d'un carter (2),
dans lequel au moins un disque (4) doté de rainures est attaché à l'arbre (1) et peut tourner conjointement avec l'arbre (1),
et un disque (3) ne pouvant pas tourner conjointement est disposé sur le disque (4) de manière directement consécutive, dans la direction d'écoulement de produit ou à l'opposé de la direction d'écoulement de produit, ledit disque étant également doté de rainures ;
dans lequel le disque (4) pouvant tourner conjointement est relié à l'arbre (1) et présente un interstice (14) en direction du carter (2), et le disque (3) ne pouvant pas tourner conjointement est relié au carter (2) et présente un interstice (15) en direction de l'arbre (1) pouvant tourner,
**caractérisé en ce que** le jeu s entre le bord du disque (4) pouvant tourner conjointement et le carter (2) est inférieur à la profondeur de pas g divisée par 4 ; g étant la distance entre le diamètre central de l'arbre (1) et le carter (2).

2. Dispositif selon la revendication 1, **caractérisé en ce que** l'extrudeuse présente une séquence en alternance de disques (4) pouvant tourner et des disques (3) ne pouvant pas tourner conjointement.

3. Dispositif selon l'une quelconque des revendications précédentes, **caractérisé en ce que** le rapport entre l'épaisseur des disques (4) pouvant tourner et le diamètre de carter est une valeur comprise entre 0,2 et 0,02, et le rapport entre l'épaisseur des disques (3) ne pouvant pas tourner et le diamètre de carter est une valeur comprise entre 0,2 et 0,02.

4. Dispositif selon l'une quelconque des revendications précédentes, **caractérisé en ce que** le rapport entre l'interstice axial entre le(s) disque(s) (4) pouvant tourner et le(s) disque(s) (3) ne pouvant pas tourner et le diamètre de carter est une valeur comprise entre 0,01 et 0,15.

5. Dispositif selon l'une quelconque des revendications précédentes, **caractérisé en ce que** les rainures dans le disque pouvant tourner et le disque ne pouvant pas tourner peuvent être disposées perpendiculairement à l'axe de rotation ou en oblique par rapport à l'axe de rotation.

6. Dispositif selon la revendication 5, **caractérisé en ce que** les rainures (7) sont disposées de manière hélicoïdale dans le disque (3) ne pouvant pas tourner.

7. Dispositif selon la revendication 5 ou 6, **caractérisé en ce que** le nombre des rainures (6) dans le disque (4) pouvant tourner et le nombre des rainures (7) dans le disque (3) ne pouvant pas tourner est respectivement de 4 à 60.

8. Dispositif selon l'une quelconque des revendications précédentes, **caractérisé en ce que** l'extrudeuse est une extrudeuse à arbres multiples, dotée de vis imbriquées.

9. Dispositif selon la revendication 7, **caractérisé en ce que** les rainures (6) du ou des disques (4) pouvant tourner sont disposées radialement et les rainures du disque (3) ne pouvant pas tourner sont disposées en partie radialement et en partie en oblique.

10. Procédé permettant d'extruder des masses plastiques, **caractérisé en ce que** le procédé comprend l'étape consistant à utiliser le dispositif selon l'une quelconque des revendications 1 à 9.

11. Procédé selon la revendication 10, **caractérisé en ce que** l'extrudeuse est utilisée pour disperser dans la masse plastique des additifs gazeux, liquides ou pulvérulents.

12. Procédé selon la revendication 11, **caractérisé en ce que** les masses plastiques sont des matières thermoplastiques ou des élastomères.

13. Procédé selon la revendication 12, **caractérisé en ce qu'**un homopolycarbonate ou un copolycarbonate ou un mélange contenant au moins un homopolycarbonate ou un copolycarbonate est mis en œuvre pour la matière thermoplastique.
